# EUROPEAN PATENT APPLICATION

(11) **EP 3 185 139 A1**
(43) Date of publication of application: **28.06.2017**
(21) Application number: 15307144.4
(22) Date of filing: 24.12.2015
(51) Int. Cl.: G06F 17/30, G09B 5/08

(54) **METHOD AND DEVICE FOR PROVIDING ADAPTED LEARNING INFORMATION TO A USER**

(71) Applicant: Thomson Licensing, 92130 Issy-les-Moulineaux (FR)
(72) Inventor: LAWRENSON, Matthew, 1030 Bussigny (CH); LUCIDARME, Thierry, 92443 Issy-les-Moulineaux (FR)
(74) Representative: Kerber, Thierry

(57) **Abstract**

A user (1) is provided with learning information adapted to a monitored state of that user. This includes logging first data, representative of a monitored state of comprehension of the user regarding a learning topic, receiving second data representative of batches of teaching material (35) stored in a teaching database and accessible via a communication network (10), receiving an original search request (13) associated with the user and pertaining to that topic, and replacing the original request with an adapted search request (14) set in function of a matching between the first and second data. The adapted request is formulated to refer to one of the batches and to correspond to the original request. The referred batch(es) can thereby be downloaded to the user via the network upon at least submitting the adapted request.

## Description

### 1. Technical field

The invention relates to the domain of automatic adaptation of learning to users, based on monitored data.

### 2. Background art

Nowadays, many students receive their learning material in digital form, for example in videos. They can then use that material at any desired time. Those practices are developing even within classrooms, through the personalized access to digital teaching data.

A challenge consists however in having the provided material suited to the students' specific needs and capacities. Usually, indeed, those materials are either uniform for all users, or arranged in chapters of increasing levels. The latter case requires user actions for selecting the most appropriate data, based on the reached level of related comprehension.

Though such traditional e-learning solutions prove efficient for relatively simple situations and well-defined courses, they become less convenient to users and more difficult to handle when the volume of available information increases and the hierarchy of data becomes more complex. The users may then be obliged to spend time and energy online in finding the appropriate sources corresponding to their current ability.

Various solutions have been proposed for automatically selecting teaching material in relation with the capacities of the students. Typical teaching tools exploited in this respect consist in proposing lists of questions so as to target adapted information on the ground of collected responses.

This requires however an involvement by the users, which must be renewed each time a change occurs, whether about a concerned topic or a learning progress. Those efforts are not only demanding in time and attention, but may be, or end up being, tedious.

Other developed solutions rely on automatically monitoring parameters pertaining to the user, notably by biometric sensors, and taking the resulting inputs into account in selecting appropriate teaching material.

For example, in the article "A Novel Approach for Attention Management in E-learning Systems" by G. Costaglia et al., published in the Proceeding of the 16th International Conference on Distributed Multimedia Systems (DMS 2010), an e-learning system providing personalized contents to students is proposed. It relies on detecting and processing implicit interaction of a student with the system, via non-invasive methods such as video tracking (e.g. sitting posture) and capture of information about the tasks simultaneously active on the user computer. A level of attention is derived from that monitoring and learning actions are proposed accordingly.

Another solution, described in patent document KR-2012-113573A to Ubion Co. Ltd., consists in providing customized learning contents to a user based on brain wave information, which gives hints pertaining to a learning inclination of the user such as sleepiness, distractibility or concentration fall.

Though technologies relying as above on biometric or other monitored feedbacks are potentially efficient in simple e-learning situations, an increase in complexity and volume of available teaching material and topics makes them less appropriate.

Should it be endeavored to adapt them anyway to multiple topics and sources of information, this would entail a significant need for bandwidth cumulated over time and for successive user operations, because multiple adjustments would be necessary.

In practice, the user would receive a first downloaded set of automatically selected data through a network, which would require some consideration on his part. Then, the user would generally be merely partially satisfied with the obtained information, if not fully unsatisfied, and would trigger some additional automatic selection of further or alternative material. The same would be repeated until the user receives appropriate teaching material, or gives up looking further.

Such operations would occur at the cost of repeated downloading, tying up excessive bandwidth resources. Also, it would be prejudicial to the friendliness and efficiency of the system. Even combining those solutions with responses to questionnaires, notably about the targeted topic, would not solve the mentioned issue in case of abundant and complex teaching material on that topic.

### 3. Summary

The purpose of the present disclosure is to overcome the disadvantages of the prior art, by offering a potentially efficient solution for providing a user with learning information adapted to a monitored state of that user, while making possible a significant limitation in bandwidth requirements.

An object of the disclosure is notably a solution that, in its best embodiments, can enable to significantly reduce the user actions, even in case of abundant and complex teaching material on multiple topics.

In this respect, the present disclosure relates to a method of providing a user with learning information adapted to a monitored state of that user.

According to the present disclosure, the method comprises:
- logging first data into at least one monitoring database, those first data being representative of at least one monitored state of comprehension of the user with respect to at least one learning topic;
- receiving in at least one processor second data representative of at least two batches of teaching material, those batches being stored in at least one teaching database and accessible via a communication network;
- receiving in the processor(s) an original search request associated with the user and pertaining to the learning topic(s);
- replacing by the processor(s) the original search request with an adapted search request set in function of a matching between the first data and the second data, the adapted search request being formulated to refer to at least one of the batches and to correspond to the original search request,
so that the referred batch(es) can be downloaded to the user via the network upon at least submitting the adapted search request.

Acting directly on user searches provides significant enhancement potentiality over existing solutions. Namely, it is then possible to adapt specific user expectations to available learning material. This can apply whatever the size and complexity of the learning material, and wherever its location or possibly scattered locations.

In addition, the search parameters automatically take into account the user's current state of comprehension at the same time as his/her requests. In this respect, no specific questionnaire needs to be filled out by the user, which can possibly avoid tedious steps.

A direct consequence of that potential close adaptation to user expectations and comprehension capacity allows for reduced bandwidth. Indeed, in best embodiments, the user can get relevant learning information in a relatively straightforward way, regarding the topic as well as the comprehension level, instead of having to iterate requests an undetermined number of times until the downloaded data are satisfying.

The method preferably comprises transmitting the adapted search request through the network and/or receiving at least part of the referred batch(es) via the network.

In preferred implementation modes, the method comprises:
- receiving environment data representative of at least one environment condition, the received environment data being associated with at least one condition of the original search request;
- taking the environment data into account in replacing the original search request with the adapted search request, by means of third data stored in at least one correlation database, the third data being representative of relationship between the environment condition(s) and an understanding ability of the user.

In an advantageous implementation, the method comprises:
- determining at least one of the learning topic(s) from the original search request and matching the first data and the second data based on the determined learning topic(s).

According to a first execution mode for obtaining the first data, the method comprises:
- receiving physiological data representative of at least one physiological measurement, the physiological data being associated with consumption of teaching material by the user for the learning topic(s);
- determining the first data by means of at least fourth data stored in at least one first cognition derivation database, the fourth data being representative of relationship between those physiological data and at least two expected states of comprehension of the user.

According to a second execution mode for obtaining the first data, which is advantageously combined with the first one, the method comprises:
- receiving online search data representative of at least one online search behavior, the online search data being associated with consumption of teaching material by the user for the learning topic(s);
- determining the first data by means of at least fifth data stored in at least one second cognition derivation database, the fifth data being representative of relationship between those online search data and at least two expected states of comprehension of the user.

Advantageously, the method comprises:
- receiving at least one parameter representative of an available bandwidth for transmitting the learning information;
- taking that/those parameter(s) into account in replacing the original search request with the adapted search request.

In a particular implementation, the second data including size information on the batches of teaching material, the method comprises:
- taking that size information into account in replacing the original search request with the adapted search request.

In addition, the present disclosure concerns a computer program for providing a user with learning information adapted to a monitored state of the user, that computer program comprising software code adapted to perform steps of a method of providing learning information compliant with the present disclosure.

The present disclosure further pertains to a non-transitory program storage device, readable by a computer, tangibly embodying a program of instructions executable by the computer to perform a method of providing learning information compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM (read-only memory), an EPROM (Erasable Programmable ROM) or a Flash memory, a portable CD-ROM (Compact-Disc ROM).

Another object of the present disclosure is a device for providing a user with learning information adapted to a monitored state of that user.

According to the present disclosure, the device includes at least one recorder configured for:
- logging first data into at least one monitoring database, those first data being representative of at least one monitored state of comprehension of the user with respect to at least one learning topic;
   and at least one processor configured for:
- receiving second data representative of at least two batches of teaching material, those batches being stored in at least one teaching database and accessible via a communication network;
- receiving an original search request associated with the user and pertaining to the learning topic(s);
- replacing the original search request with an adapted search request set in function of a matching between the first data and the second data, the adapted search request being formulated to refer to at least one of the batches and to correspond to the original search request,
so that the referred batch(es) can be downloaded to the user via the network upon at least submitting the adapted search request.

The device preferably comprises at least one of:
- a network transmitter configured for transmitting the adapted search request through the network, the processor being further configured for controlling the transmission of the adapted search request by the network transmitter through the network; and
- a network receiver configured for receiving at least part of the referred batch(es) via the network (which can correspond to same components as the network transmitter).

Preferably, the processor(s) is/are further configured for:
- receiving environment data representative of at least one environment condition, those received environment data being associated with at least one condition of the original search request;
- taking those environment data into account in replacing the original search request with the adapted search request, by means of third data stored in at least one correlation database, the third data being representative of relationship between the environment condition(s) and an understanding ability of the user.

In an advantageous embodiment, the processor(s) is/are further configured for:
- determining at least one of the learning topic(s) from the original search request and matching the first data and the second data based on the determined learning topic(s).

According to a first implementation mode for obtaining the first data, the processor(s) is/are further configured for:
- receiving physiological data representative of at least one physiological measurement, the physiological data being associated with consumption of teaching material by the user for the learning topic(s);
- determining the first data by means of at least fourth data stored in at least one first cognition derivation database, the fourth data being representative of relationship between those physiological data and at least two expected states of comprehension of the user.

According to a second implementation mode for obtaining the first data, which is advantageously combined with the first one, the processor(s) is/are further configured for:
- receiving online search data representative of at least one online search behavior, the online search data being associated with consumption of teaching material by the user for the learning topic(s);
- determining the first data by means of at least fifth data stored in at least one second cognition derivation database, the fifth data being representative of relationship between those online search data and at least two expected states of comprehension of the user.

Advantageously, the processor(s) is/are further configured for:
- receiving at least one parameter representative of an available bandwidth for transmitting the learning information;
- taking that/those parameter(s) into account in replacing the original search request with the adapted search request.

In a particular embodiment, the second data including size information on the batches of teaching material, the processor(s) is/are further configured for:
- taking that size information into account in replacing the original search request with the adapted search request.

### 4. List of figures

The present disclosure will be better understood, and other specific features and advantages will emerge upon reading the following description of particular and non-restrictive illustrative embodiments, the description making reference to the annexed drawings wherein:
- figure 1 is a block diagram representing schematically a learning system and its execution by a user, that system comprising a device compliant with the present disclosure for providing the user with adapted learning information;
- figure 2 is a flow chart showing steps executed by the device of figure 1, in assessing a current comprehension of the user about a given topic;
- figure 3 is a flow chart showing steps executed by the device of figure 1, in replacing an original search request with an adapted search request;
- figure 4 diagrammatically shows a particular processing apparatus comprising the device represented on figure 1;
- figure 5 is a flow chart showing steps of a method compliant with the present disclosure, executed by a particular embodiment of the system of figure 1;
- figure 6 represents schematically teaching material and associated indicators, used in executing the method of figure 5;
- figure 7 is a flow chart detailing part of the method of figure 5, executed in assessing correlations between monitored information and a state of comprehension of a user;
- figure 8 is a flow chart detailing part of the method of figure 5, executed in assessing current learning resources and a current state of comprehension of a user.

### 5. Detailed description of embodiments

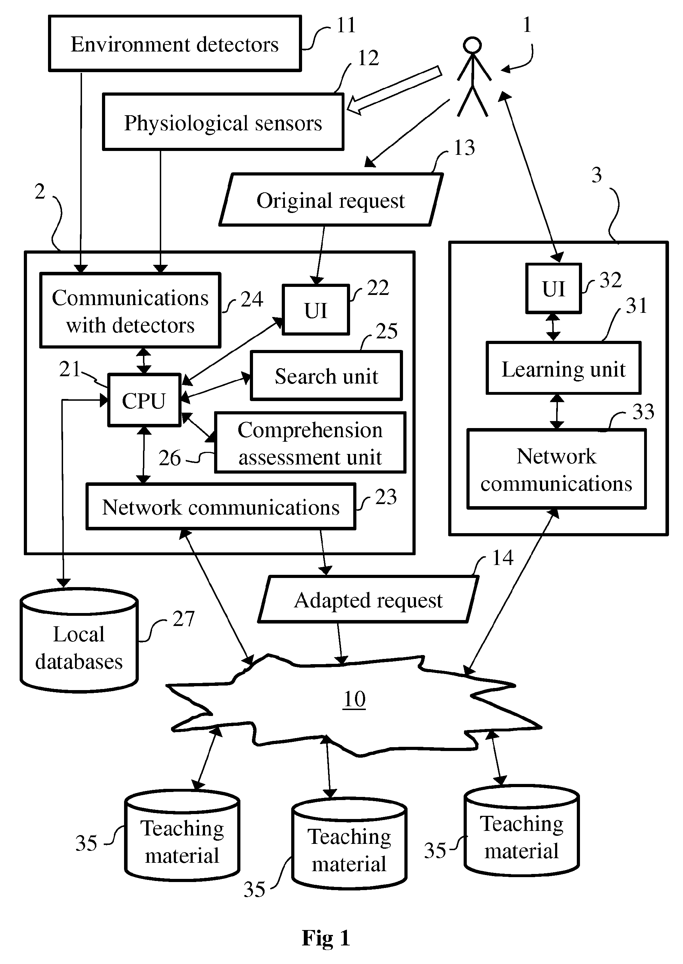

The present disclosure will be described in reference to a particular functional embodiment of a system for providing a user 1 with learning information, as illustrated on **Figure 1****.**

That system comprises a search device 2 configured for enabling user 1 to proceed with information searches through a communication network 10, and a learning device 3 configured for providing user 1 with teaching material 35 for consumption.

The term "configured" is used in the present disclosure as broadly encompassing initial configuration, later adaptation or complementation, or any combination thereof alike, whether effected through hardware or software (including firmware).

Though in the represented embodiment, the devices 2 and 3 are shown as separated, they can either be carried in respective distinct apparatus or alternatively be integrated in a unique apparatus. For example, the device 2 is a wearable apparatus having the capacity to run an Internet browser with search capability, such as a smartphone, a smart watch or a tablet, while the device 3 is a video device such as a TV set, or a portable media or audio player. In another example, both devices 2 and 3 are embodied in a unique tablet or in a laptop.

Also, the search device 2 can take any physical form designed, configured and/or adapted for performing the mentioned functions and produce the mentioned effects or results. In some implementations, it is embodied as a set of apparatus or physical parts of apparatus, whether grouped in a same machine or in different, possibly remote, machines.

Also, the described functionalities can be implemented in hardware, software, firmware, or any mixed form thereof as well. They are preferably embodied within at least one processor of the device 2.

A processor refers here to a processing device in general, including, for example, a computer, a microprocessor, an integrated circuit, or a programmable logic device. Additionally, it may be implemented by instructions being performed by a processor, and such instructions (and/or data values produced by an implementation) may be stored on a processor-readable medium such as, e.g., an integrated circuit, a software carrier or other storage device such as, e.g., a hard disk, a compact disc ("CD"), an optical disc (such as, for example, a DVD, often referred to as a digital versatile / video disc), a RAM (Random Access Memory) or a ROM (Read-Only Memory). Instructions may form an application program tangibly embodied on a processor-readable medium. A processor may be characterized as, for example, both a device configured to carry out a process and a device that includes a processor-readable medium (such as a storage device) having instructions for carrying out a process. Further, a processor-readable medium may store, in addition to or in lieu of instructions, data values produced by an implementation.

The network 10 is advantageously a wide area network providing access to Internet resources, through search engines. In other implementations, it consists in a local area network, such as for example a network dedicated to a company or to a teaching body. In still other embodiments, the network 10 is a personal area network, the user 1 having preferably access to a large collection of teaching materials distributed among several local data sources.

The devices 2 and 3 are connected to the network 10 via wireless and/or wired communication modes. For example, they are connected to the network 10 via WiFi (for Wireless Fidelity), UMTS (for Universal Mobile Telecommunications System), LTE (for Long-Term Evolution), cable or infrared communications.

The system of Figure 1 comprises also environment detectors 11 and physiological sensors 12. The environment detectors 11 are used for capturing one or several kinds of environmental data in the neighbourhood of the user 1 or pertaining to the user 1, including alone or in any combination: time, temperature, location, ambient noise, lighting, hygrometry, recent activities (such as walking, standing up, eating), personal agenda conditions, number of people around, etc. The detectors 11 are respectively suited to the specific kinds of measured information.

The physiological sensors 12 are capable of capturing physiological data regarding the user 1. Such sensors 12 can be in contact with the user 1, and for example include EEG sensors (for electroencephalography) mounted on a person's scalp, which may rely on brain-computer interfaces available on the consumer market. They can further or instead include EMG (for electromyography), EKG (for electrocardiography) and/or GSR (for galvanic skin response) apparatus.

In other implementations, the sensors 12 are not in direct contact with the user 1, and can for example include image sensors monitoring the user's pupils with sufficient capability for ascertaining changes in the pupil's diameter. Other possible implementations include video cameras monitoring the user's posture. Both remote and contact devices can also be used jointly in the sensors 12.

In advantageous embodiments, wearable devices contain a combination of at least some of the environment detectors 11 and physiological sensors 12 grouped together.

The teaching material 35 comprises for example a video of a lecture, a teaching illustrated text, a sound recording or other audio, video and/or audio/visual material.

The user 1 submits an original search request 13 through the search device 2, in order to get learning information on a desired topic.

Based on implementations that will be detailed below, that original request 13 is processed by the search device 2, on the ground of parameters derived from multiple inputs. The latter include previous monitoring data provided by the environment detectors 11 and physiological sensors 12, previous user's behaviours in relation with the device 2, such as notably the contents of previous searches, and information on teaching material available via the network 10. The original request 13 is also part of those inputs.

The exploited data are available in particular in local databases 27, which can be stored in the device 2 as preferably dynamic memory resources, e.g. based on RAM or EEPROM (Electrically-Erasable Programmable ROM) capacities. The local databases 27 can alternatively be stored in external memories, e.g. Flash memories or SSD (Solid-State Disk). The storage can also combine internal and external resources.

Based on the processing of the original request 13, the search device 2 outputs an adapted search request 14, which is submitted to a search engine via the network 10 to obtain appropriate items among the teaching material 35. These items are downloaded to the learning device 3, which as indicated above may correspond to the search device 2.

Preferably, in an intermediary step, only links to the teaching material 35 identified as relevant are communicated to the user 1. This leaves the user an opportunity to launch a new search, taking the obtained information into consideration, before asking for the downloading of the pointed teaching material 35 itself.

More precisely, the search device 2 comprises one or more processors 21 such as a CPU (Computer Processing Unit), cooperating with a user interface 22 for interactions with the user 1, a unit 23 for network communications and a unit 24 for communications with detectors, including the environment detectors 11 and the physiological sensors 12. Such detectors are well known in the art and will not be described further. For example, the communication units 23 and 24 are exploited for wireless communications and each of them includes an encoding/decoding part, a modem and an antenna.

The data exploited by processor 21, notably those obtained from the environment detectors 11 and physiological sensors 12, are recorded into the local databases 27 by one or several recorders, which in the illustrated implementations correspond to the processor(s) 21. In alternative embodiments, a recorder or recorders distinct from the processor 21 are exploited.

A recorder refers here in a general way to a device in charge of recording data into a storage space, including notably a dedicated apparatus, one or several dedicated components in an apparatus, or multi-functions apparatus or components adapted for data storage, such as for example a processor. The search device 2 further comprises a search unit 25 in charge of dealing with search requests, and a comprehension assessment unit 26 in charge of assessing a level of comprehension of a user. It will be understood that the units 25 and 26 can be part of the processor 21, but can also consist in memory units such as ROM dedicated to storing sets of instructions to be executed by the processor 21.

The learning device 3 comprises a user interface 32 and a unit 33 for network communications, as well as a learning unit 31. The latter can for example include a video and/or audio playing entity.

For implementations in which the devices 2 and 3 and combined in a unique apparatus, the processor 21 is advantageously exploited in cooperation with the learning unit 31, while the user interfaces 22 and 32 are preferably combined, and likewise for the network communication units 23 and 33.

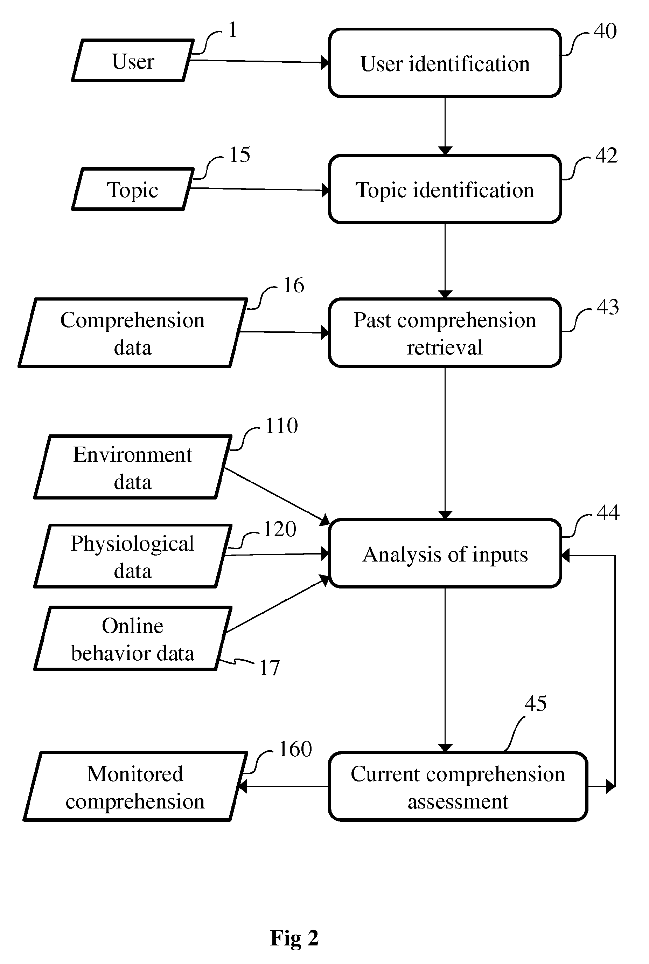

The operations executed by the search device 2 in relation with the comprehension assessment unit 26, as shown on **Figure 2****,** are as follows:
- at step 41, the user 1 is identified, which may be made e.g. through a connection identifier;
- at step 42, a learning topic 15 is identified; this can be effected in particular through an explicit mention by the user 1, by getting information from the learning device 3 or from detectors thereof about teaching material being currently consumed by user 1, and/or by analysing search data entered by the user 1;
- at step 43, comprehension data 16 previously recorded in the databases 27 are retrieved, which enables to obtain a previous understanding level by user 1;
- at step 44, inputs coming from environment data 110, physiological data 120, and/or online behaviour data 17 are analysed;
- at step 45, a current level of comprehension 160 as monitored through the inputs of step 44 is assessed.

The online behaviour data 17 correspond to one or several types of behaviour of user 1 with respect to devices, in particular to search device 2, able to provide feedback pertaining to the user's current level of understanding.

For example, they can be induced from text in search parameters entered by user 1, which can indicate the desire for basic material (e.g. "basic", "easy", "for dummies", etc.). In another example, the online behaviour data 17 are computed from a repetition rate of searches for similar material, indicating that the user 1 is experiencing difficulties in understanding the considered subject material. Several types of such behaviour data are advantageously combined.

Preferably, the steps executed in relation with the comprehension assessment unit 26 are repeatedly executed over time at various frequencies in function of the considered steps. For example: comprehension assessment is effected only when a user is active on the device 2 for an identified learning topic, physiological and environment data are then produced every 5 to 15 seconds, online behaviour is monitored as and when the user proceeds with searches, and the current comprehension assessment is computed every 5 minutes.

The techniques developed for input analysis of step 44 and comprehension assessment of step 45 consist advantageously in relying on lookup tables that include values derived by experts after targeted evaluations, for example on representative corpus of students. They also rely advantageously on data obtained during a training period, during which the user 1 provides explicit responses to questions pertaining to his/her understanding and those responses are associated with information monitoring.

The outputs obtained in relation with the comprehension assessment unit 26 are themselves preferably exploited for enriching, updating and/or refining the lookup tables over time.

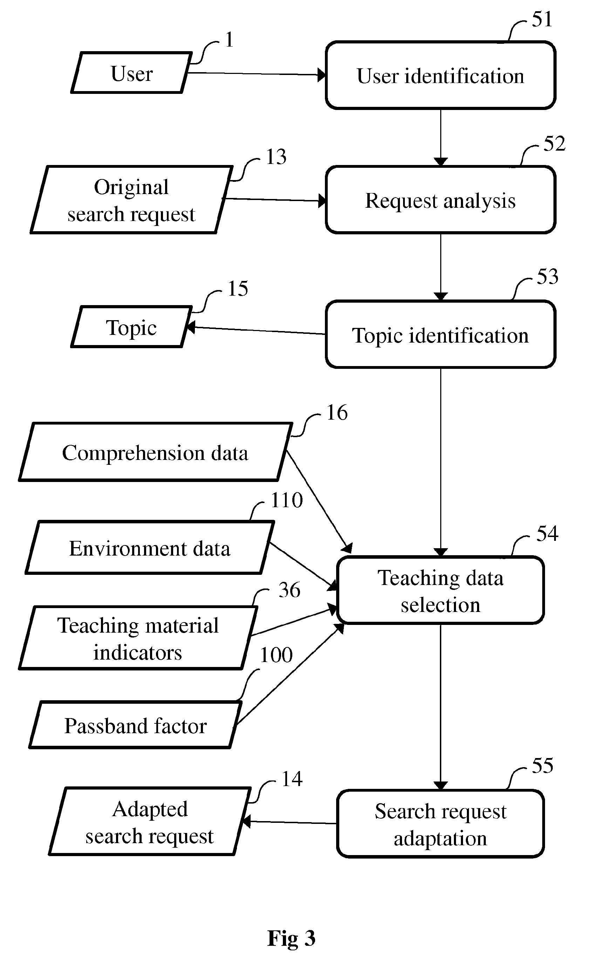

The operations executed by the search device 2 in relation with the search unit 25, as shown on **Figure 3****,** are as follows:
- at step 51, the user 1 is identified, which may be made e.g. through a connection identifier;
- at step 52, the original search request 13 entered by the user 1 is analysed; the request 13 can take the form of text or recorded audio;
- at step 53, the topic 15 selected by the user 1 is identified; this is advantageously made from the search request 13 itself, but that step 53 may alternatively have been made upstream for a whole set of searches;
- at step 54, appropriate teaching data are selected in relation with the user 1 and the topic 15; that selection is based on multiple inputs, which include the comprehension data 16 corresponding to the current level of comprehension of the user 1 for the topic 15, the environment data 110 derived from the environment detectors 11 at the time of the request, teaching material indicators 36 about teaching items currently available through the network 10, and advantageously a bandwidth factor 100 enabling to take the capacities of the network 10 into account;
- at step 55, the search request is adapted so as to become the adapted search request 14.

The thereby produced adapted search request 14 is preferably submitted to the user 1 before being transmitted through the network 10, so that the request can be approved or modified by the user 1 if desired.

The adaptation executed on the original search request 13 consists advantageously in an addition of terms, leading to an augmented search. However, it can also consist in replacing some terms entered by the user 1.

In an example use case, two students are watching a video lecture when a professor is describing a particular subject. A first student understands the subject well, while the second student is confused. Then, when the two students do further web searches on the subject, their search terms are augmented with key words describing their understanding of the subject, so that the first student receives more advanced material while the second student receives material more focused on basic explanations.

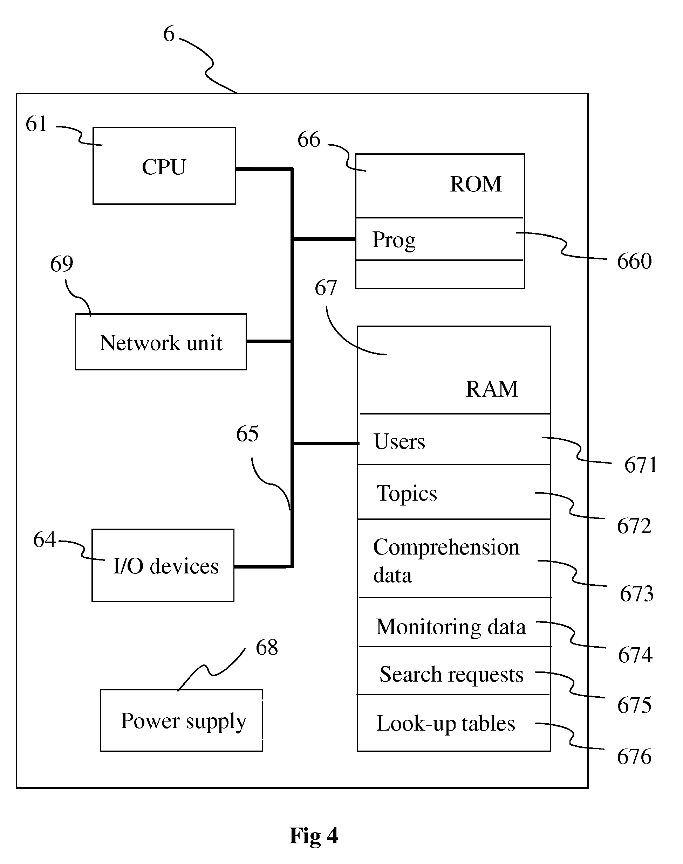

A particular apparatus 6, visible on **Figure 4****,** is embodying the search device 2 described above. It corresponds for example to a personal computer (PC), a laptop, a tablet or a smartphone. It comprises the following elements, connected to each other by a bus 65 of addresses and data that also transports a clock signal:
- a microprocessor 61 (or CPU) ;
- a non-volatile memory of ROM type 66;
- a RAM 67;
- one or several I/O (Input/Output) devices 64 such as for example a keyboard, a mouse, a joystick, a webcam; other modes for introduction of commands such as for example vocal recognition are also possible;
- a power supply 68 ; and
- a network unit 69, such as a radiofrequency, cell network or cable communication unit.

According to a variant, the power supply 68 is external to the apparatus 6.

It is noted that the word "register" used in the description of memories 66 and 67 designates in each of those memories a memory zone of any size, which can cover low capacity (a few binary data) as well as large capacity (enabling to store a whole program or all or part of information representative of data calculated or to be displayed).

When switched-on, the microprocessor 61 loads and executes the instructions of a program contained in the register 660 of the ROM 66.

The random access memory 67 notably comprises:
- in a register 671, data on users 1,
- in a register 672, data on topics 15;
- in a register 673, comprehension data 16;
- in a register 674, monitored data such as environment data 110, physiological data 120 and/or online behavior data 17;
- in a register 675, search requests;
- in a register 676, look-up tables exploited notably for assessing a level of comprehension of a user and adapting a search request.

According to a variant, the program for comprehension assessment and/or search request adaptation is stored in the RAM 67. This enables more flexibility, in particular when related functionalities are not embedded originally in apparatus 6.

Additional details will be provided below with the presentation of more specific embodiments.

In this respect, the environment detectors 11 and physiological sensors 12 are used to capture respectively Environmental Monitoring Data (EMD) and Cognition Monitoring Data (CMD).

The local databases 27 of Fig. 1 include:
- a database of Additional Search Parameters (ASP), which associates values of a user's current level of comprehension to text that can be used to augment a search parameter;
- a database storing values related to a priori effects of environment factors on cognitive capacities, called LEAPCI (for Likely Effect of A Priori Cognitive Influence) parameters;
- a database of Material-Topic (MT) data, storing a considered topic associated with various portions of a teaching material, for example that topic being discussed at a certain time within a video;
- a database of Topic Understanding (TU) data, storing topics that have been studied by a considered user and the user's understanding whilst studying that topic;
- a database with Weighting Factors (WF), storing metrics that provide weighting to the various components used in an algorithm for determining a user's current state of understanding;
- an EMD database storing the EMD data;
- a Cognition Data (CD) database, storing the CMD data as well as Cognitive Indicators (CI), representative of user behaviors with respect to devices and including the online behavior data 17.

A set of algorithms associated with the search unit 25 and comprehension unit 26 includes:
- an algorithm for computing a Current Likely Level of Comprehension (CLLC) by a user, relying on the user's TU related to a given topic, the current corresponding LEAPCI and the weighting factors;
- an algorithm for determining the LEAPCI parameters;
- an algorithm for deriving the topic covered in a teaching material from EMD data (notably the time);
- an algorithm that determines the TU data from CMD data as inputs.

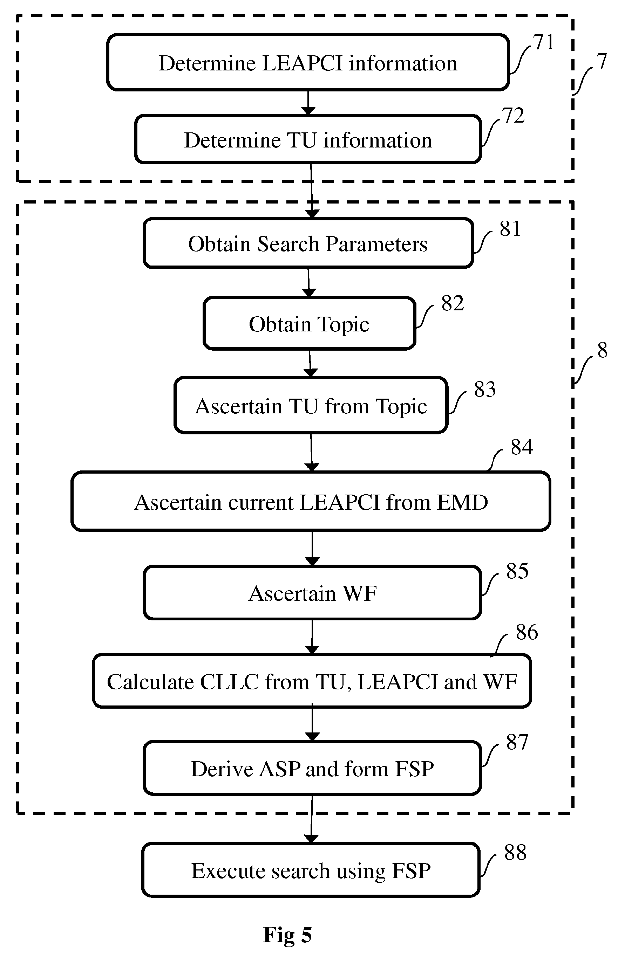

The process executed with those more specific embodiments will now be described, in relation with the flow charts of **Figures 5****,** **7** **and** **8****.** A main process (Fig. 5) comprises an upstream stage 7 of assessing a comprehension state of a user, and a downstream stage 8 of automatically adapting search requests by the user.

It should be noted that the upstream stage 7 is in fact preferably repeated over time, including during search operations and afterwards. The terms "upstream" and "downstream" refer therefore here merely to a specific search operation by the user at a given point of time. Namely, the search stage 8 is itself upstream with respect to later completed and/or updated comprehension assessment operations.

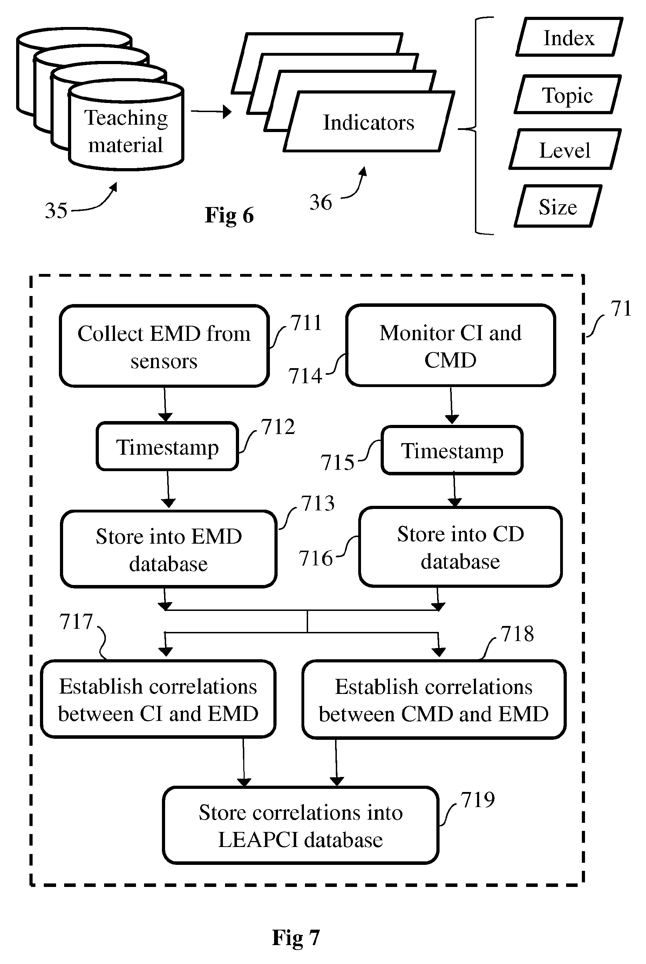

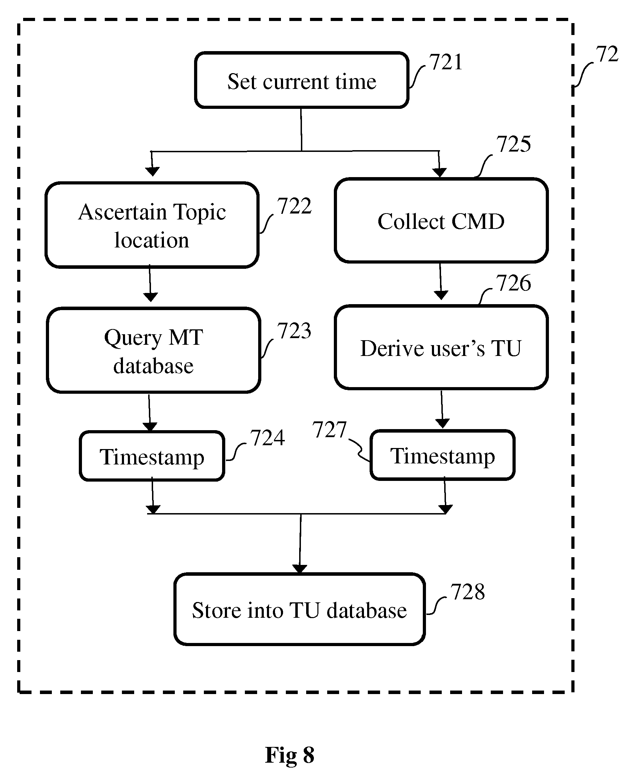

At the comprehension assessment stage 7, LEAPCI parameters are determined at step 71 and TU data are determined at step 72 of Fig. 5, as detailed below in relation with Fig. 7 and 8.

In deriving LEAPCI states over time (Fig. 7):
- EMD are collected from environment detectors 11 at step 711, timestamped at step 712 and stored into the EMD database at step 713;
- CI and CMD data are monitored at step 714 from respectively the search device 2 and/or learning device 3, and from the physiological sensors 12, timestamped at step 715 and stored into the CD database at step 716;

- EMD are compared with CI data at step 717 and with CMD data at step 718; this is preferably made jointly;
- correlations between EMD, CI and CMD data obtained from comparisons of steps 717 and 718 are stored into the LEAPCI database at step 719, including environmental events (time, activity, etc.) and corresponding effects associated with CI and/or CMD data.

Examples of comparisons between EMD, CI and CMD data include using various time increments such as season, month, day, time of day, and assessing the CI and CMD for patterns. Correlations may e.g. express that a user tends to have more difficulties in comprehending information in the evening versus the morning.

Other examples include comparing the CI and CMD to events such as eating, exercising, noise, presence of certain people, etc. Correlations may e.g. express that a user has more difficulties in comprehending information during a given period after eating, or finds comprehension easier after exercising, etc.

Representative illustrative situations of correlations between EMD, CI and CMD are as follows:
- user's requests target essentially generalist sites, low level publication or standard education sites when the user is tired, stressed and after 11 PM, so that a reduced level of understanding in such circumstances is induced;
- seasonal sneezing is detected through sensors coupled with calendar conditions, in relation with a reduced level of understanding;
- weather constants are good and agenda is free, in association with a raised level of understanding.

Advantageously, the user is enabled to enter and/or modify directly some correlation parameters. For instance, the user can record a positive or negative effect of previous sport practice on his/her concentration ability.

In deriving Topic Understanding TU (Fig. 8):
- whilst a user consumes a teaching material, e.g. watches an education video, a current time is set at step 721;
- sensors mounted in the wearable devices (which sensors may be part of the environment detectors 11) assess at step 722 the teaching material and more precisely the portion thereof being currently consumed, e.g. the section of a video being watched and/or of an audio recording being listened to; those devices can for example include a microphone, an image sensor and/or a timer enabling to track time elapsed since a reference audio or video signal (e.g. the beginning of a section);

- the MT database is then queried at step 723, the sensed data being compared to information from that MT database, and the concerned topic is ascertained and timestamped at step 724;
- in parallel with the topic assessment, CMD data are collected from the physiological sensors 12 at step 725;
- the user's TU is derived from the CMD at step 726, as a current likely level of comprehension, and timestamped at step 727;
- both the timestamped assessed TU and ongoing topic are stored into the TU database at step 728.

The user's level of understanding at step 726 can be derived from the various collected measurements, notably in relation with a degree of attention and signs of satisfaction or frustration. As an illustration, a prolonged attention combined with visible signs of frustration indicates that the user is unsuccessfully endeavoring to understand.

Related technologies pertaining to attention and emotions are known to persons skilled in the art, and for example disclosed respectively in the articles "Recognizing the Degree of Human Attention Using EEG Signals from Mobile Sensors" to Liu and al., *Sensors* 2013, 13 (ISSN 1424-8220) and "Motion Magnification of Facial Micro-expressions" to Gogia and Liu, MIT, Dec. 8, 2014 (http://runpeng.mit.edu/prolects/microexpression.pdf).

At the search stage 8 (Fig. 5):
- Search Parameters (SP) are obtained at step 81, based on a user search request, typically in the frame of an Internet search to be executed on the search device 2;
- an associated Topic is ascertained at step 82; this is advantageously made by proceeding with a comparison between the search query and contents of the TU database, in order to assess a matching; the comparison can be based on keywords, by notably using words provided in the search request, by using a thesaurus and/or by executing a lexical or semantic comparison; if the comparison results in no matches, the search is executed as entered and the present process stops; otherwise, the matching topic is set to be the concerned Topic;
- the Topic is used to query the TU database at step 83 so as to find the corresponding user's TU;
- the user's LEAPCI is ascertained at step 84 from the current EMD, by querying the LEAPCI database;
- the Weighting Factors (WF) are found at step 85 by querying the WF database; in some embodiments, the WF can be personalized to each specific user, the system being potentially tailored to the needs and performance of that user; the WF can then be entered manually by the users themselves, or derived via analysis of previous performance, notably by monitoring the user's reaction to returned search results over time as well as their next action(s) - e.g. searches for more or less advanced teaching material;
- the user's current likely level of comprehension (CLLC) is derived at step 86 from the assessed TU, LEAPCI and WF; some advantageous mathematical formulae exploited for it include a linear combination of TU and LEAPCI data with WF coefficients, a product of TU and LEAPCI data weighted with WF coefficients, and a computation of a TU value and a LEAPCI value, combined with WF coefficients, and a selection of the larger of the TU and LEAPCI values ;
- Additional Search Parameters (ASP) are derived at step 87 so as to form a Full Search Parameter (FSP), which results from the adding of the ASP to the original search parameters as entered by the user; the ASP is obtained from the user's CLLC by querying the ASP database, in determining a set of text that matches the users likely ability to comprehend and can be exploited as an ASP.

Once the search stage 8 is achieved, a search is executed at step 88 using the FSP, preferably subject to a user's validation. The search can thus be tailored to the user's current likelihood of understanding of the provided material.

Preferably, the determination of the ASP takes network bandwidth factors expressly into account. In this respect, as visible on **Figure 6****,** the indicators 36 are obtained by the search device 2 about the available teaching material 35 (which can take place at step 82). Those indicators 36 contain information not only about the related topics, but also on indexes, difficulty levels and bit sizes associated with batches of the relevant teaching material 35.

The term "batch" is used in the present disclosure as a consistent set of data, to be used together in a learning prospect. Those data do not need to be located in a same place before being downloaded and can even be scattered instead in various locations. They can further pertain to only part of a teaching entity, such as a teaching video or audio recording, game or other audio, video or audio/visual content. Alternatively, the batches or some of them can each be focused in one place and/or form an entity requiring a full downloading.

In deriving the ASP, the search device 2 takes advantageously the indicators into account. In particular, for a given topic, not only the difficulty level but also the size are processed as inputs in determining appropriate batches. For example, for a given difficulty level corresponding to several available batches, the batch having the smallest size is selected. It is then preferable that information about the previously downloaded batches be kept locally, so that upon a next request associated with the same topic and level, another batch having possibly a larger bit size be selected - again with advantageously the smallest size among the other batches available at that next time.

The sizes of the batches can also be used as weighting parameters in determining an appropriate batch, thereby the ASP. For example, though a batch corresponds to the level of understanding by the user, another batch having a lower level may be selected, due to its significantly lower size. If the granularity of the levels is fine enough, this should likely be satisfying to the user understanding and progression anyway, while reducing the bandwidth requirements at this stage.

In a particular embodiment, the bandwidth factor 100 is also made available to the search device 2 and considered in determining the appropriate ASP. That bandwidth factor 100 may indicate e.g. a currently desired maximum size for the downloaded documents at the considered time. Preferably, then, the selected batch or batches are compliant with the indicated bandwidth.

More details are now provided regarding the determination of the ASP. In preferred embodiments, a parameter guides the search towards a particular set of sites, e.g. generalist or more specific sites. Examples of such sets include:
- sites focused on basic tutorials for a basic level of understanding;
- general knowledge sites (such as the free-access encyclopedia Wikipedia™) for an intermediate level of understanding;
- academic papers, white papers, etc. from more specialized sources (such as the freely accessible web search engines Google Scholar™ or Microsoft Academic Search™) for advanced understanding.

In a particular embodiment, additional terms are automatically set as follows:
- a training corpus of pages is defined, where each of the pages is labeled according to difficulty; this may be a corpus covering a range of subjects, or a corpus specific to a given subject, with accuracy increasing for the more specific corpus;
- a document feature representation is defined, consisting of a set of words together with additional data representing each document; the feature representation is a subset of the words in the document; furthermore, in the representation, each of the words may be labeled according to e.g. semantic function or topic of the word; the features used for a document can be notably obtained as topic proportions by a topic model method such as Latent Dirichlet Allocation (LDA); a description of the latter is available e.g. in the article "Latent Dirichlet Allocation" to Blei et al., Journal of Machine Learning Research 3, 2003, 993-1022;
- a classifier is trained on the training corpus that classifies each of the documents according to its difficulty;
- feature elements (words) most indicative for each of the difficulty classes are determined;
- the difficulty of given texts from courses is assessed with the above classifier; for example, outputs for a given course include a difficulty score (e.g. 1 to 10) and a feature representation consisting in a list of words is associated with the level of difficulty of the document;
- the level of understanding of the user is assessed and correlated with the course difficulty score; where that level is poor, words derived from a feature set associated with a lower course material difficulty score can be selected, while where that level is good, words derived from a feature set associated with a higher course material difficulty score can be selected.

In a specific implementation, the corpus is generated at the time of a search query, a number of documents being first retrieved using a general search, then classified, the classification being used for determining the most appropriate documents to return to the user. In another implementation, the corpus is generated upstream and made available to multiple later user searches, which is more bandwidth protective.

In a variant embodiment, instead of adding complementary search terms to the original search request, the latter is replaced with a modified search request. A particular implementation is similar to the previous one regarding additional terms, while differing therefrom in that where the search query does not match well with the course material difficulty score, query terms are modified to better match the user's level of understanding.

In a specific embodiment, where original words are in the same category as the feature set but are not the most commonly associated words, those original words are replaced with more frequently used words belonging to the same feature set. This can be done by using a lookup table or an online lexical database (such as e.g. WordNet™).

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of providing a user (1) with learning information adapted to a monitored state of said user,
**characterized in that** said method comprises:
- logging first data (17, 110, 120) into at least one monitoring database, said first data being representative of at least one monitored state of comprehension of said user with respect to at least one learning topic (15);
- receiving in at least one processor (21) second data (36) representative of at least two batches of teaching material (35), said batches being stored in at least one teaching database and accessible via a communication network (10);
- receiving in said at least one processor an original search request (13) associated with said user and pertaining to said at least one learning topic;
- replacing by said at least one processor said original search request with an adapted search request (14) set in function of a matching between said first data and said second data, said adapted search request being formulated to refer to at least one of said batches and to correspond to said original search request,
so that said at least one referred batch can be downloaded to said user via said network upon at least submitting said adapted search request.

2. A method according to claim 1, **characterized in that** it comprises:
- receiving environment data (110) representative of at least one environment condition, said received environment data being associated with at least one condition of said original search request (13);
- taking said environment data into account in replacing said original search request with said adapted search request (14), by means of third data stored in at least one correlation database, the third data being representative of relationship between said at least one environment condition and an understanding ability of said user (1).

3. A method according to claim 1 or 2, **characterized in that** it comprises:
- determining at least one of said at least one learning topic (15) from said original search request (13) and matching said first data (17, 110, 120) and said second data based on said at least one determined learning topic.

4. A method according to any of the preceding claims, **characterized in that** it comprises:
- receiving physiological data (120) representative of at least one physiological measurement, said physiological data being associated with consumption of teaching material by said user (1) for said at least one learning topic (15);
- determining said first data by means of at least fourth data stored in at least one first cognition derivation database, the fourth data being representative of relationship between said physiological data and at least two expected states of comprehension of said user.

5. A method according to any of the preceding claims, **characterized in that** it comprises:
- receiving online search data (17) representative of at least one online search behavior, said online search data being associated with consumption of teaching material by said user (1) for said at least one learning topic (15);
- determining said first data by means of at least fifth data stored in at least one second cognition derivation database, the fifth data being representative of relationship between said online search data and at least two expected states of comprehension of said user.

6. A method according to any of the preceding claims, **characterized in that** it comprises:
- receiving at least one parameter (100) representative of an available bandwidth for transmitting said learning information;
- taking said at least one parameter into account in replacing said original search request (13) with said adapted search request (14).

7. A method according to any of the preceding claims, **characterized in that** said second data including size information (36) on said batches of teaching material (35), said method comprises:
- taking said size information into account in replacing said original search request (13) with said adapted search request (14).

8. A computer program for providing a user with learning information adapted to a monitored state of said user, said computer program comprising software code adapted to perform steps of a method in accordance with any of claims 1 to 7.

9. A device (2, 6) for providing a user (1) with learning information adapted to a monitored state of said user,
**characterized in that** said device includes at least one recorder configured for:
- logging first data (17, 110, 120) into at least one monitoring database, said first data being representative of at least one monitored state of comprehension of said user with respect to at least one learning topic (15);
and at least one processor configured for:
- receiving second data (36) representative of at least two batches of teaching material (35), said batches being stored in at least one teaching database and accessible via a communication network (10);
- receiving an original search request (13) associated with said user and pertaining to said at least one learning topic;
- replacing said original search request with an adapted search request (14) set in function of a matching between said first data and said second data, said adapted search request being formulated to refer to at least one of said batches and to correspond to said original search request, so that said at least one referred batch can be downloaded to said user via said network upon at least submitting said adapted search request.

10. A device (2, 6) according to claim 9, **characterized in that** said processor is further configured for:
- receiving environment data (110) representative of at least one environment condition, said received environment data being associated with at least one condition of said original search request (13);
- taking said environment data into account in replacing said original search request with said adapted search request (14), by means of third data stored in at least one correlation database, the third data being representative of relationship between said at least one environment condition and an understanding ability of said user (1).

11. A device (2, 6) according to claim 9 or 10, **characterized in that** said processor is further configured for:
- determining at least one of said at least one learning topic (15) from said original search request (13) and matching said first data and said second data based on said at least one determined learning topic.

12. A device (2, 6) according to any of claims 9 to 11, **characterized in that** said processor is further configured for:
- receiving physiological data (120) representative of at least one physiological measurement, said physiological data being associated with consumption of teaching material by said user (1) for said at least one learning topic (15);
- determining said first data by means of at least fourth data stored in at least one first cognition derivation database, the fourth data being representative of relationship between said physiological data and at least two expected states of comprehension of said user.

13. A device (2, 6) according to any of claims 9 to 12, **characterized in that** said processor is further configured for:
- receiving online search data (17) representative of at least one online search behavior, said online search data being associated with consumption of teaching material by said user (1) for said at least one learning topic (15);
- determining said first data by means of at least fifth data stored in at least one second cognition derivation database, the fifth data being representative of relationship between said online search data and at least two expected states of comprehension of said user.

14. A device (2, 6) according to any of claims 9 to 13, **characterized in that** said processor is further configured for:
- receiving at least one parameter (110) representative of an available bandwidth for transmitting said learning information;
- taking said at least one parameter into account in replacing said original search request (13) with said adapted search request (14).

15. A device (2, 6) according to any of claims 9 to 14, **characterized in that** said second data including size information (36) on said batches of teaching material (35), said processor is further configured for:
- taking said size information into account in replacing said original search request (13) with said adapted search request (14).
